# EUROPEAN PATENT SPECIFICATION

(11) **EP 2 752 039 B1**
(45) Date of publication and mention of the grant of the patent: **27.02.2019**
(21) Application number: 12790808.5
(22) Date of filing: 31.10.2012
(51) Int. Cl.: H04W 4/90, H04L 29/06

(54) **METHODS AND APPARATUS FOR DETERMINING NETWORK SUPPORT FOR OTHER MEDIA DURING IMS EMERGENCY SESSIONS**
VERFAHREN UND VORRICHTUNG ZUR BESTIMMUNG DER NETZWERKUNTERSTÜTZUNG FÜR ANDERE MEDIEN WÄHREND IMS-NOTRUFSITZUNGEN
PROCÉDÉS ET APPAREIL POUR DÉTERMINER LA COMPATIBILITÉ DU RÉSEAU AVEC D'AUTRES SUPPORTS PENDANT DES SESSIONS IMS DE SECOURS

(30) Priority: 02.11.2011 US 201161554656 P
(43) Date of publication of application: 09.07.2014
(73) Proprietor: Telefonaktiebolaget LM Ericsson (publ), 164 83 Stockholm (SE)
(72) Inventor: LINDHOLM, Fredrik, S-112 15 Stockholm (SE); SULTANA, Shabnam, Westmount, Québec H3Z 2E9 (CA)
(74) Representative: Ericsson
(86) International application number: PCT/EP2012/071555
(87) International publication number: WO 2013/064536

(56) References cited:
- US-A1- 2008 095 098
- SCHULZRINNE COLUMBIA U B ROSEN MARCONI H: "Emergency Services for Internet Telephony Systems; draft-schulzrinne-sipping-emergency-arch-0 2.txt", 20041018, no. 2, 18 October 2004 (2004-10-18), XP015039663, ISSN: 0000-0004
- "No title retrieved", 3GPP DRAFT; NOVES_REACH112POSITION_FINAL, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. SA WG1, no. Nashville, Tennessee, USA; 20110214, 3 February 2011 (2011-02-03), XP050514354, [retrieved on 2011-02-03]
- "3rd Generation Partnership Project; Technical Specification Group Services and System Aspects; Study on Non-Voice Emergency Services (Release 11)", 3GPP STANDARD; 3GPP TR 22.871, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. SA WG1, no. V11.3.0, 30 September 2011 (2011-09-30), pages 1-29, XP050554261, [retrieved on 2011-09-30]

## Description

### Technical Field

The present invention relates to methods and apparatus for determining network support for other media during IMS emergency sessions.

### Background

The IP Multimedia Subsystem (IMS) is the technology defined by the Third Generation Partnership Project (3GPP) to provide IP Multimedia services over telecommunication networks. The IMS allows a telecommunications system to offer multimedia services to user terminals (referred hereinafter as "user equipment"(UE)). For example, these services can comprise voice, video, text, chat, and combinations thereof. To do so, IMS provides key features to enrich the end-user person-to-person communication experience through the integration and interaction of services. IMS allows new rich person-to-person (client-to-client) as well as person-to-content (client-to-server) communications over an IP-based network. The IMS is able to connect to both PSTN/ISDN (Public Switched Telephone Network/Integrated Services Digital Network) as well as the Internet. In relation to an IMS, a UE may be any device, mobile or stationary, enabled to communicate by radio or any other means with the IMS via an IP-CAN, for instance but not limited to e.g. mobile phone, smart phone, sensors, meters, vehicles, household appliances, medical appliances, media players, cameras, or any type of consumer electronic device, for instance but not limited to television, radio, lighting arrangements, tablet computer, laptop, or PC.

The IMS makes use of the Session Initiation Protocol (SIP) to set up and control calls or sessions between UEs (or UEs and application servers). The Session Description Protocol (SDP), carried by SIP signalling, is used to describe and negotiate the media components of the session. Whilst SIP was created as a user-to-user protocol, IMS allows operators and service providers to control user access to services and to charge users accordingly.

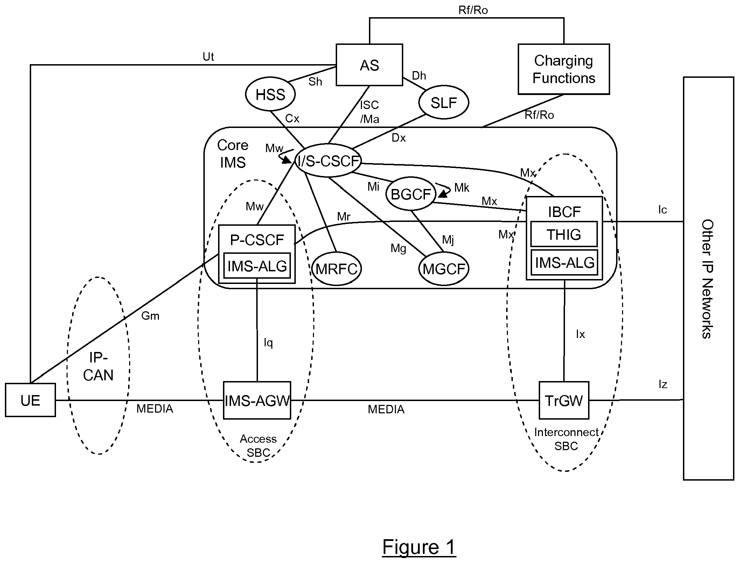

Figure 1 illustrates schematically the architecture for the IMS and its relationship to an IP-Connectivity Access Network (IP-CAN). In the IMS Core Network, Call/Session Control Functions (CSCFs) operate as SIP proxies, and interface with other entities such as Border Gateway Control Functions (BGCFs) and Media Resource Function Controllers (MRFCs) amongst others. The 3GPP architecture defines at least three types of CSCFs, and there can be multiple instances of each type of CSCF within an operator's network. A Proxy CSCF (P-CSCF) is the first point of contact within the IMS for a UE; a Serving CSCF (S-CSCF) provides services to the subscriber; an Interrogating CSCF (I-CSCF) identifies the correct S-CSCF and forwards to that S-CSCF a request received from a UE via a P-CSCF.

The Home Subscriber Server (HSS) is the main database in the IMS for storage of subscriber and service related data, including user identities, registration information, access parameters and the Initial Filter Criteria (IFC) used to trigger services. For example, the HSS provides support to the IMS nodes/functional entities implementing call and/or session functionalities in order to complete the routing/roaming procedures by solving authentication, authorization, naming/addressing resolution, location dependencies, etc. The HSS also contains functionality of a Home Location Register and Authentication Centre (HLR/AUC) to provide support to packet-switched domain entities, such as the Serving GPRS Support Node (SGSN) and Gateway GPRS Support Node (GGSN), and to circuit switched domain entities, such as the Mobile Switching Centres (MSC).

Within the service layer of the IMS network, Application Servers (ASs) are provided for implementing IMS service functionality. Application Servers provide services to end users in an IMS system, and may be connected either as end-points over the 3GPP defined Ma interface, or "linked in" by an S-CSCF over the 3GPP defined ISC interface. In the latter case, Initial Filter Criteria (IFC) are used by an S-CSCF to determine which Applications Servers should be "linked in" during a SIP Session establishment (or indeed for the purpose of any SIP method, session or non-session related). The IFCs are received by the S-CSCF from an HSS during the IMS registration procedure as part of a user's Subscriber Profile.

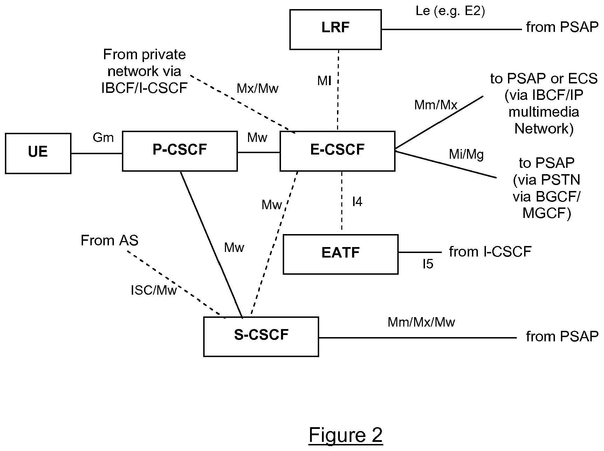

The IMS standards also provide support for emergency sessions. In this regard, figure 2 illustrates schematically the IMS network architecture for implementing IMS emergency services, which includes an Emergency CSCF (E-CSCF), a Location Retrieval Function (LRF), and an Emergency Access Transfer Function (EATF). For simplicity, not all functional components of the IMS, e.g. IBCF, MGCF and BGCF, are shown in this figure. When an emergency call is placed using a UE, it is normally routed from the P-CSCF to an E-CSCF. The E-CSCF is concerned with handling emergency sessions, and is responsible for the routing of emergency calls to the correct emergency centre or Public Safety Answering Point (PSAP). The E-CSCF has an interface to a LRF, and the E-CSCF can request the LRF to retrieve location information relating to a UE that has initiated an IMS emergency session. The E- CSCF also has an interface to an EATF. The EATF enables service continuity of IMS emergency sessions. The P-CSCF, EATF and E-CSCF are always located in the same serving network, which is the visited network when the UE is roaming.

Whilst the pre-existing IMS standards provide support for emergency sessions, these standards only consider support for emergency voice/speech calls, and do not consider how the emergency session procedures could support other media, wherein the term "other media" refers to media other than voice/speech (e.g. video, session based messaging, file transfer etc). Consequently, 3GPP is attempting to develop mechanisms to provide support for other media during emergency sessions as part of enhanced emergency services support. However, it has been recognised herein that, whilst a conventional network can indicate support of IMS emergency sessions, by sending a indication of such support to the UE either broadcasted to the UE over the radio interface or during the lower layer network attachment to the LTE network, such an indication will only relate to support for emergency voice calls, and does not necessarily indicate that the IMS network and radio network also supports other media during emergency sessions.

US2008/0095098 discloses techniques relating to sending and receiving of multimedia files between mobile users and emergency response service operators while connected through a voice call. "Emergency Services for Internet Telephony Systems" by Schulzrinne & Rosen (October 2004, ISSN: 0000-0004) discloses the use of media other than voice or text during emergency calls. The choice of media and encodings is negotiated on a call-by-call basis using standard SIP mechanisms.

3GPP Draft; NOVES_REACH112POSITION_FINAL, February 2013 discloses a proposal for NOVES, a system for communicating with PSAPs using additional media.

3^{rd} Generation Partnership Project; Technical Specification Group Services and System Aspects; Study on Non-Voice Emergency Services (Release 11), September 2011 is a technical report detailing how NOVES works in providing non-voice emergency communication to consumers.

### Summary

It is therefore an object of the present invention to provide methods and apparatus for providing accurate information regarding network support for other media during IMS emergency sessions. This object is solved by the subject matter defined in appended independent claims 1, 2, 9 and 10.

According to a first aspect there is provided a method of operating an entity within an IMS network. The method comprises, receiving a message sent by a UE, determining if media other than voice can be supported for IMS emergency sessions involving the UE, and sending a response to the UE, the response indicating if media other than voice can be supported for IMS emergency sessions involving the UE.

The step of determining if media other than voice can be supported for IMS emergency sessions involving the UE can comprise one or more of determining if media other than voice is supported for IMS emergency sessions by an available PSAP, determining if media other than voice is supported for IMS emergency sessions by an access network through which the UE is accessing the IMS network, and determining if media other than voice is supported for IMS emergency sessions by entities within the IMS network that serve the UE.

In order to determine if media other than voice is supported by an available PSAP, the method may comprise determining if there is a PSAP serving an area in which the UE is currently located that supports media other than voice during IMS emergency sessions.

The method may further comprise, if it is determined that media other than voice can be supported for IMS emergency sessions involving the UE, including in the response sent to the UE an indication that media other than voice can be supported for IMS emergency sessions involving the UE. The indication that media other than voice can be supported for IMS emergency sessions involving the UE can comprise a feature tag included within a header field of the response sent to the UE. The response message sent to the UE may also include an indication of types of media that can be supported for IMS emergency sessions involving the UE.

The message received from the UE can include an indication that the UE supports media other than voice for IMS emergency sessions. The indication that the UE supports media other than voice for IMS emergency sessions can comprise a feature tag included within a header field of the message received from the UE. The message received from the UE may also include an indication of types of media that the UE supports for IMS emergency sessions.

The entity may be any of a P-CSCF and a S-CSCF, and the message received from the UE may then be a request for an IMS emergency registration. If the entity is a S-CSCF, then the step of determining if media other than voice can be supported for IMS emergency sessions can be further based on the user profile of a user of the UE. Alternatively, the entity may be any of a P-CSCF and an E-CSCF, and the message received from the UE may then be a request for establishment of an IMS emergency session. As a further alternative, the entity may be a PSAP and the message received from the UE may then be a request for establishment of an IMS emergency session.

According to a second aspect there is provided an apparatus configured to operate as an entity within an IMS network. The apparatus comprises a receiver configured to receive a message sent by a UE, a processor configured to determine if media other than voice can be supported for IMS emergency sessions involving the UE, and to generate a response indicating if media other than voice can be supported for IMS emergency sessions involving the UE, and a transmitter configured to send the response to the UE.

In order to determine if media other than voice can be supported for IMS emergency sessions involving the UE, the processor may be configured to implement one or more of determining if media other than voice is supported for IMS emergency sessions by an available PSAP, determining if media other than voice is supported for IMS emergency sessions by an access network through which the UE is accessing the IMS network, and determining if media other than voice is supported for IMS emergency sessions by entities within the IMS network that serve the UE. In order to determine if media other than voice is supported by an available PSAP, the processor may be configured to determine if there is a PSAP serving an area in which the UE is currently located that supports media other than voice during IMS emergency sessions.

The processor may be further configured to, if it is determined that media other than voice can be supported for IMS emergency sessions involving the UE, include an indication that media other than voice can be supported for IMS emergency sessions involving the UE in the response. The processor may be further configured to include a feature tag within a header field of the response as the indication that media other than voice can be supported for IMS emergency sessions involving the UE. The processor may also be configured to include in the response an indication of types of media that can be supported for IMS emergency sessions involving the UE.

The apparatus may be configured to operate as one of a P-CSCF and a S-CSCF, and the message received from the UE may be a request for an IMS emergency registration. If the apparatus configured to operate as a S-CSCF, then the processor may be further configured to make use of a user profile of a user of the UE when determining if media other than voice can be supported for IMS emergency sessions involving the UE. Alternatively, the apparatus may be configured to operate as one of a P-CSCF and an E-CSCF, and the message received from the UE may be a request for establishment of an IMS emergency session.

### Brief Description of the Drawings

Some embodiments of the present invention will now be described in detail with reference to the accompanying drawings, in which:
Figure 1 illustrates schematically the architecture for an IMS;
Figure 2 illustrates schematically the IMS network architecture for implementing IMS emergency services;
Figure 3 illustrates a signalling flow diagram of an example IMS emergency registration in accordance with the methods described herein;
Figure 4 illustrates a signalling flow diagram of an example IMS emergency session establishment in accordance with the methods described herein;
Figure 5 illustrates schematically an embodiment of an IMS network entity configured to implement the methods described herein; and
Figure 6 illustrates schematically an embodiment of an entity of a UE configured to implement the methods described herein.

### Detailed Description

In order to at least mitigate the problems identified above there will now be described methods and apparatus for providing accurate information regarding network support for other media during IMS emergency sessions. These methods involve configuring an entity within the IMS network such that, upon receiving a message sent by a UE, the IMS network entity determines if media other than voice can be supported for an IMS emergency session involving the UE. The IMS network entity is configured to then send a response to the UE, the response indicating if media other than voice can be supported for IMS emergency sessions involving the UE.

The determination made by the IMS network entity can be based on one or more of whether a PSAP serving the area in which the UE is currently located supports other media for IMS emergency sessions, whether the access network used by the UE supports other media for IMS emergency sessions, and whether the IMS network entities serving the UE and/or that would participate in an IMS emergency sessions involving the UE support other media for IMS emergency sessions. In other words, the determination is based on the support of other media for IMS emergency sessions within the area in which the UE is currently located (i.e. a geographical area or region).

Therefore, in order to determine if media other than voice can be supported for IMS emergency sessions involving the UE, the IMS network entity can be configured to determine if media other than voice is supported for IMS emergency sessions by an available PSAP. Alternatively, or in addition, the IMS network entity can be configured to determine if media other than voice is supported for IMS emergency sessions by an access network through which the UE is accessing the IMS network. Alternatively, or in addition, the IMS network entity can be configured to determine if media other than voice is supported for IMS emergency sessions by entities within the IMS network that serve the location of the UE. The IMS network entity can also be configured to ascertain the area in which the UE is currently located in order to determine if media other than voice can be supported for IMS emergency sessions involving the UE.

If the IMS network entity determines that media other than voice can be supported for IMS emergency sessions involving the UE, then the IMS network entity will include, in the response sent to the UE, an indication that media other than voice can be supported for IMS emergency sessions involving the UE. Such an indication can be provided by a feature tag included within a header field of the response sent to the UE. The IMS network entity can also be configured to include in the response an indication of types of media that can be supported for IMS emergency sessions involving the UE.

The message received from the UE may also include an indication that the UE supports media other than voice for IMS emergency sessions. This indication can be provided by a feature tag included within a header field of the message received from the UE. In addition, the message received from the UE can include an indication of types of media that the UE supports for IMS emergency sessions.

The method described herein can be implemented during an emergency registration of the UE with the IMS, such that the message received from the UE is a request for an IMS emergency registration. The entity may then be any of a Proxy Call Session Control Function (P-CSCF) and a Serving Call Session Control Function (S-CSCF) that is involved in the IMS emergency registration. If the entity is a S-CSCF, then the step of determining if media other than voice can be supported for IMS emergency sessions involving the UE can be further based upon a user profile of a user of the UE, which the S-CSCF obtains/downloads from the HSS. In addition, the method described herein can also be implemented during establishment of an IMS emergency session, such that the message received from the UE is a request for establishment of an IMS emergency session. The entity may then be any of a PSAP, a P-CSCF, and an Emergency Call Session Control Function (E-CSCF).

As a result of implementing the methods described herein, a UE will be made aware when the media other than voice can be supported for an IMS emergency session. Consequently, the UE can be configured to receive a response from an entity within the IMS network, the response indicating if media other than voice can be supported for IMS emergency sessions involving the UE; and to consider/evaluate this indication during any IMS emergency sessions involving the UE.

The methods described herein effectively provide that, when an IMS network supports media other than voice during an emergency IMS session, an IMS network entity can provide an indication of the support of other media for IMS emergency sessions involving the UE. In particular, the IMS network entity can base the determination on at least whether or not a PSAP related to that location supports other media, but can also consider/take account of whether or not the IP-CAN/RAT type via which the user is accessing the IMS network supports other media and/or whether other IMS network entities in the area of that location support other media.

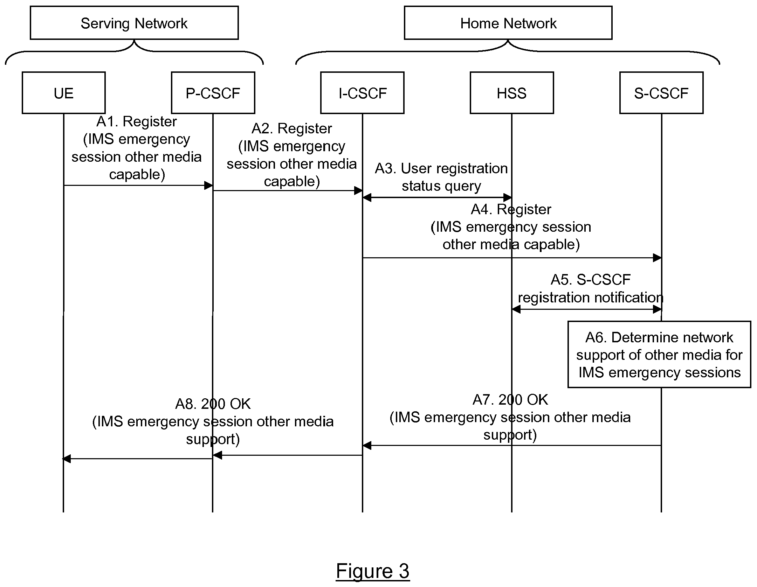

By way of example, Figure 3 illustrates a signalling flow diagram of an IMS emergency registration during which with the methods described herein are implemented. The steps performed are as follows:
- A1.: A UE generates a SIP REGISTER message and includes an indication that this is an the emergency registration request. The UE also includes an indication that the UE is capable of media other than voice for IMS emergency sessions. For example, this indication could be provided by a feature tag included within a header field of the SIP REGISTER request. The indication could also specify the types of other media that the UE is capable of supporting for IMS emergency sessions. The UE sends the SIP REGISTER towards the IMS.
- A2.: A P-CSCF within the IMS network receives the SIP REGISTER message, and forwards the SIP REGISTER request to an I-CSCF.
- A3.: The I-CSCF then implements a user registration status query with the HSS, and thereby identifies a S-CSCF.
- A4.: The I-CSCF therefore forwards the SIP REGISTER message to the S-CSCF.
- A5.: The S-CSCF sends a registration notification to the HSS, and thereby obtains a user profile for a user of the UE.
- A6.: The S-CSCF then implements any service control, and also determines if media other than voice can be supported for IMS emergency sessions involving the UE. To do so, the S-CSCF can determine an area in which the UE is currently located, and can thereby determine if there is a PSAP serving the area where the UE is currently located that supports media other than voice during IMS emergency sessions. In addition, the S-CSCF can also determine whether or not media other than voice is supported for IMS emergency sessions by the access network through which the UE is accessing the IMS network and/or whether or not media other than voice is supported for IMS emergency sessions by entities within/serving an area in which the UE is currently located. Furthermore, the S-CSCF can optionally take into account the user profile.
- A7.: In this example, the S-CSCF determines that media other than voice can be supported for IMS emergency sessions involving the UE. The S-CSCF therefore generates a SIP 200 OK response and includes an indication that other media support is available for IMS emergency sessions. The S-CSCF then sends the response to the UE.
- A8.: The response including the indication is then routed to the UE via the I-CSCF and the P-CSCF.

As an alternative to the procedure illustrated in Figure 3, when implemented during an IMS emergency registration, the P-CSCF could be configured to perform the determination as to whether media other than voice can be supported for IMS emergency sessions involving the UE, and can therefore include an appropriate indication in the response sent to the UE.

The indication included in the response sent to the UE could be provided by a feature tag included in a header field of the SIP 200 OK response. For example, such a feature tag could be included in the path header field of in as a Feature-Caps header field. The indication could also specify the types of other media that can be supported for IMS emergency session, such as session-based messaging, file transfer, video etc.

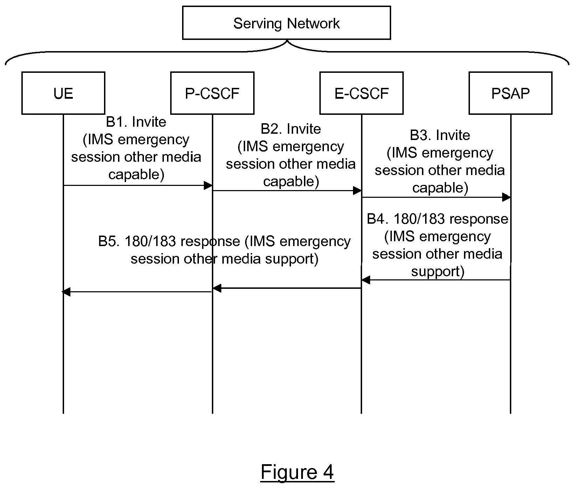

As a further example, Figure 4 illustrates a signalling flow diagram of an IMS emergency session establishment during which with the methods described herein are implemented. The steps performed are as follows:
- B1.: A UE generates a SIP INVITE message and includes an indication that this is an emergency session establishment request. The UE also includes an indication that the UE is capable of media other than voice for IMS emergency sessions. The indication could also specify the types of other media that the UE is capable of supporting for IMS emergency sessions. For example, this indication could be provided by a feature tag included within a header field of the SIP INVITE request. The UE sends the SIP INVITE towards the IMS.
- B2.: A P-CSCF within the IMS network receives the SIP INVITE message, and detects that the SIP INVITE relates to an emergency session establishment request. Consequently, the P-CSCF selects an E-CSCF in the same network to handle the emergency session request and forwards the SIP INVITE request to the E-CSCF.
- B3.: Upon receiving the SIP INVITE, the E-CSCF determines the PSAP to which the request should be routed. If required, this may involve the E-CSCF retrieving location information for the UE. The E-CSCF then forwards the SIP INVITE request to the PSAP.
- B4.: Upon receiving the SIP INVITE, the PSAP determines if media other than voice can be supported for IMS emergency sessions involving the UE. In this example, the PSAP determines that it does support media other than voice. The PSAP therefore generates a provisional response, such as a SIP 180 Ringing or SIP 183 Session in Progress, and includes an indication that other media support is available for IMS emergency sessions. The PSAP then sends the response to the UE.
- B5.: The response including the indication is then routed to the UE via the E-CSCF and the P-CSCF.

As an alternative to the procedure illustrated in Figure 4, when implemented during an IMS emergency session establishment, either of the P-CSCF and the E-CSCF could be configured to perform the determination as to whether media other than voice can be supported for IMS emergency sessions involving the UE, and can therefore include an appropriate indication in the response sent to the UE.

The indication included in the response sent to the UE could be provided by a feature tag included in a header field of either the provisional response or a final response (e.g. a SIP 200 OK). For example, such a feature tag could be included in the path header field of in as a Feature-Caps header field. The indication could also specify the types of other media that can be supported for IMS emergency session, such as session-based messaging, file transfer, video etc.

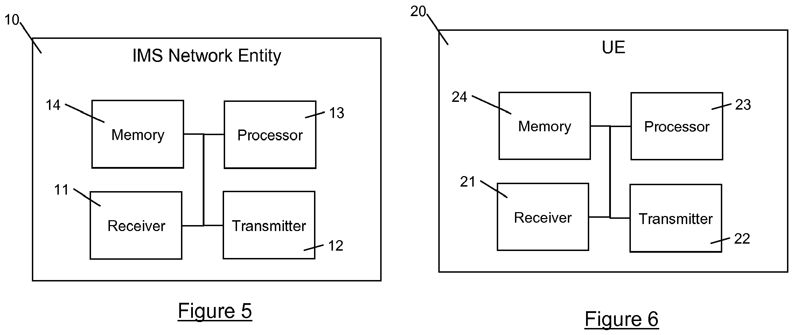

Figure 5 illustrates schematically an embodiment of an IMS network entity 10 configured to implement the methods described above. The IMS network entity can be implemented as a combination of computer hardware and software and comprises a receiver 11, a transmitter 12, a processor 13, and a memory 14. The memory 14 stores the various programs/executable files that are implemented by the processor 13, and also provides a storage unit for any required data. The programs/executable files stored in the memory 14, and implemented by the processor 13, include but are not limited to an other media support determination unit, a message processing unit, and an emergency session support unit that are configured to implement the methods described above. As detailed above, the IMS network entity can be any of a P-CSCF, a S-CSCF, a E-CSCF and a PSAP.

Figure 6 illustrates schematically an embodiment of an entity of a UE 20 configured to implement the methods described above. The UE 20 can be implemented as a combination of computer hardware and software and comprises a receiver 21, a transmitter 22, a processor 23, and a memory 24. The memory 24 stores the various programs/executable files that are implemented by the processor 23, and also provides a storage unit for any required data. The programs/executable files stored in the memory 24, and implemented by the processor 23, include but are not limited to a message processing unit, an emergency session support unit, and an other media support determination unit.

Although the invention has been described in terms of preferred embodiments as set forth above, it should be understood that these embodiments are illustrative only. Those skilled in the art will be able to make modifications and alternatives in view of the disclosure which are contemplated as falling within the scope of the appended claims. Each feature disclosed or illustrated in the present specification may be incorporated in the invention, whether alone or in any appropriate combination with any other feature disclosed or illustrated herein. For example, in the illustrated example signalling flow diagrams described above, only those messages and headers that are of particular relevance are shown. Those skilled in the art will be aware those messages and headers that have not been included in this illustration.

## Claims

1. A method of operating an entity (10) within an IP Multimedia Subsystem, IMS, network, wherein the entity is a Proxy-Call Session Control Function, P-CSCF or an Emergency-Call Session Control Function, E-CSCF, the method comprising:
the entity receiving a message sent by a user equipment, UE (20), the message being a request for establishment of an IMS emergency session, and the message including an indication that the UE supports media other than voice for IMS emergency;
the entity determining if media other than voice can be supported for IMS emergency sessions involving the UE; and
the entity sending a response to the message to the UE (20), and including in the response an indication indicating if media other than voice can be supported for IMS emergency sessions involving the UE (20).

2. A method of operating an entity (10) within an IP Multimedia Subsystem, IMS, network for emergency registration of a user equipment, UE (20), wherein the entity is a Serving-Call Session Control Function, S-CSCF or a Proxy-Call Session Control Function, P-CSCF, and the IMS network is the UE's home network, the method comprising:
the entity receiving a message sent by a user equipment, UE (20), the message being an emergency registration request, and the message including an indication that the UE supports media other than voice for IMS emergency sessions;
the entity determining if media other than voice can be supported for IMS emergency sessions involving the UE; and
the entity sending a response to the emergency registration request message to the UE (20), the response indicating if media other than voice can be supported for IMS emergency sessions involving the UE (20).

3. The method as claimed in claim 1 or claim 2, wherein the step of determining if media other than voice can be supported for IMS emergency sessions involving the UE (20) comprises any of:
determining if media other than voice is supported for IMS emergency sessions by an available Public Safety Answering Point, PSAP;
determining if media other than voice is supported for IMS emergency sessions by an access network through which the UE is accessing the IMS network (10); and
determining if media other than voice is supported for IMS emergency sessions by entities within the IMS network (10) that serve the UE (20).

4. The method as claimed in claim 3, wherein, in order to determine if media other than voice is supported by an available PSAP, the method comprises:
determining if there is a PSAP serving an area in which the UE (20) is currently located that supports media other than voice during IMS emergency sessions.

5. The method as claimed in any preceding claim , wherein the response to the UE (20) comprises a feature tag included within a header field of the response , the feature tag indicating that media other than voice can be supported for IMS emergency sessions involving the UE (20).

6. The method as claimed in any of the preceding claims, wherein the response message sent to the UE (20) includes an indication of types of media that can be supported for IMS emergency sessions involving the UE (20).

7. The method as claimed in any preceding claim, wherein the indication that the UE (20) supports media other than voice for IMS emergency sessions comprises a feature tag included within a header field of the message received from the UE (20).

8. The method as claimed in any of the preceding claims, wherein the message received from the UE (20) includes an indication of types of media that the UE (20) supports for IMS emergency sessions.

9. An apparatus (10) configured to operate as an entity within an IP Multimedia Subsystem, IMS, network wherein the entity is a Proxy-Call Session Control Function, P-CSCF or an Emergency-Call Session Control Function, E-CSCF, the apparatus comprising:
a receiver (11) configured to receive a message sent by a UE (20), the message being a request for establishment of an IMS emergency session, and the message including an indication that the UE (20) supports media other than voice for IMS emergency sessions;
a processor configured to determine if media other than voice can be supported for IMS emergency sessions involving the UE (20), and to generate a response indicating if media other than voice can be supported for IMS emergency sessions involving the UE (20); and
a transmitter (12) configured to send the response to the message to the UE (20).

10. An apparatus configured to operate as an entity within an IP Multimedia Subsystem, IMS, network (10) for emergency registration of a user equipment, UE (20), wherein the entity is a Serving-Call Session Control Function, S-CSCF or a Proxy-Call Session Control Function, P-CSCF, and the IMS network is the UE's home network, the apparatus comprising:
a receiver (11) configured to receive a message sent by a UE (20), the message being an emergency registration request, and the message including an indication that the UE (10) supports media other than voice for IMS emergency sessions;
a processor configured to determine if media other than voice can be supported for IMS emergency sessions involving the UE (20), and to generate a response to the emergency registration request indicating if media other than voice can be supported for IMS emergency sessions involving the UE (20); and
a transmitter (12) configured to send the response to the message to the UE (20).

11. The apparatus as claimed in claim 9 or claim 10, wherein the processor (13) is further configured to implement the method steps according to any of claims 2 to 7.

12. The apparatus as claimed in claim 10, wherein, if the entity is a S-CSCF, then the processor (13) is further configured to make use of a user profile of a user of the UE (20) when determining if media other than voice can be supported for IMS emergency sessions involving the UE (20).

## Patentansprüche

1. Verfahren zum Betrieb einer Einheit (10) innerhalb eines IP-Multimedien-Subsystem-, IMS, Netzwerks, wobei die Einheit eine Vertretungsanrufs-Sitzungs-Kontrollfunktion, P-CSCF, oder eine Notruf-Sitzungs-Kontrollfunktion, E-CSCF ist, das Verfahren umfassend:
Empfangen einer von einer Benutzerausrüstung, UE (20), gesendeten Nachricht durch die Einheit, wobei die Nachricht eine Anfrage zum Aufbau einer IMS-Notrufsitzung ist und die Nachricht eine Angabe aufweist, dass die UE andere Medien als Sprache für IMS-Notruf unterstützt;
Bestimmen, ob andere Medien als Sprache für IMS-Notrufsitzungen mit der UE unterstützt werden können, durch die Einheit; und
Senden einer Antwort auf die Nachricht an die UE (20) und Aufnehmen einer Angabe, die angibt, ob andere Medien als Sprache für IMS-Notrufsitzungen mit der UE (20) unterstützt werden können, in die Antwort durch die Einheit.

2. Verfahren zum Betrieb einer Einheit (10) innerhalb eines IP-Multimedien-Subsystem-, IMS, Netzwerks zur Notrufregistrierung einer Benutzerausrüstung, UE (20), wobei die Einheit eine Dienstanrufs-Sitzungs-Kontrollfunktion, S-CSCF, oder eine Vertretungsanrufs-Sitzungs-Kontrollfunktion, P-CSCF ist und das IMS-Netzwerk das Heimnetzwerk der UE ist, wobei das Verfahren umfasst:
Empfangen einer von einer Benutzerausrüstung, UE (20), gesendeten Nachricht durch die Einheit, wobei die Nachricht eine Notrufregistrierungsanfrage ist und die Nachricht eine Angabe aufweist, dass die UE andere Medien als Sprache für IMS-Notrufsitzungen unterstützt;
Bestimmen, ob andere Medien als Sprache für IMS-Notrufsitzungen mit der UE unterstützt werden können, durch die Einheit; und
Senden einer Antwort auf die Notrufregistrierungsanfragenachricht an die UE (20) durch die Einheit, wobei die Antwort angibt, ob andere Medien als Sprache für IMS-Notrufsitzungen mit der UE (20) unterstützt werden können.

3. Verfahren nach Anspruch 1 oder Anspruch 2, wobei der Schritt des Bestimmens, ob andere Medien als Sprache für IMS-Notrufsitzungen mit der UE (20) unterstützt werden können, eines umfasst von:
Bestimmen, ob andere Medien als Sprache für IMS-Notrufsitzungen durch einen verfügbaren Antwortpunkt für öffentliche Sicherheit, PSAP, unterstützt werden;
Bestimmen, ob andere Medien als Sprache für IMS-Notrufsitzungen durch ein Zugriffsnetzwerk, über das die UE auf das IMS-Netzwerk (10) zugreift, unterstützt werden; und
Bestimmen, ob andere Medien als Sprache für IMS-Notrufsitzungen durch Einheiten innerhalb des IMS-Netzwerks (10), die die UE (20) bedienen, unterstützt werden.

4. Verfahren nach Anspruch 3, wobei, um zu bestimmen, ob andere Medien als Sprache durch einen verfügbaren PSAP unterstützt werden, das Verfahren umfasst:
Bestimmen, ob es einen PSAP gibt, der einen Bereich bedient, in dem sich die UE (20) derzeit befindet, der andere Medien als Sprache während IMS-Notrufsitzungen unterstützt.

5. Verfahren nach einem vorstehenden Anspruch, wobei die Antwort auf die UE (20) ein Feature-Tag umfasst, das in einem Header-Feld der Antwort enthalten ist, wobei das Feature-Tag angibt, dass andere Medien als Sprache für IMS-Notrufsitzungen mit der UE (20) unterstützt werden können.

6. Verfahren nach einem der vorstehenden Ansprüche, wobei die an die UE (20) gesendete Antwortnachricht eine Angabe von Medientypen aufweist, die für IMS-Notrufsitzungen mit der UE (20) unterstützt werden können.

7. Verfahren nach einem vorstehenden Anspruch, wobei die Angabe, dass die UE (20) andere Medien als Sprache für IMS-Notrufsitzungen unterstützt, ein Feature-Tag umfasst, das in einem Header-Feld der von der UE (20) empfangenen Nachricht enthalten ist.

8. Verfahren nach einem der vorstehenden Ansprüche, wobei die von der UE (20) empfangene Nachricht eine Angabe von Medientypen aufweist, die die UE (20) für IMS-Notrufsitzungen unterstützt.

9. Vorrichtung (10), die konfiguriert ist zum Betrieb als eine Einheit innerhalb eines IP-Multimedien-Subsystem-, IMS, Netzwerks, wobei die Einheit eine Vertretungsanrufs-Sitzungs-Kontrollfunktion, P-CSCF, oder eine Notruf-Sitzungs-Kontrollfunktion, E-CSCF ist, wobei die Vorrichtung umfasst:
einen Empfänger (11), der konfiguriert ist zum Empfangen einer von einer UE (20) gesendeten Nachricht, wobei die Nachricht eine Anfrage zum Aufbau einer IMS-Notrufsitzung ist und die Nachricht eine Angabe aufweist, dass die UE (20) andere Medien als Sprache für IMS-Notrufsitzungen unterstützt;
einen Prozessor, der konfiguriert ist zum Bestimmen, ob andere Medien als Sprache für IMS-Notrufsitzungen mit der UE (20) unterstützt werden können, und Erzeugen einer Antwort, die angibt, ob andere Medien als Sprache für IMS-Notrufsitzungen mit der UE (20) unterstützt werden können; und
einen Sender (12), der konfiguriert ist zum Senden der Antwort auf die Nachricht an die UE (20).

10. Vorrichtung, die konfiguriert ist zum Betrieb als eine Einheit innerhalb eines IP-Multimedien-Subsystem-, IMS, Netzwerks (10) zur Notrufregistrierung einer Benutzerausrüstung, UE (20), wobei die Einheit eine Dienstanrufs-Sitzungs-Kontrollfunktion, S-CSCF, oder eine Vertretungsanrufs-Sitzungs-Kontrollfunktion, P-CSCF ist und das IMS-Netzwerk das Heimnetzwerk der UE ist, wobei die Vorrichtung umfasst:
einen Empfänger (11), der konfiguriert ist zum Empfangen einer von einer UE (20) gesendeten Nachricht, wobei die Nachricht eine Notrufregistrierungsanfrage ist und die Nachricht eine Angabe aufweist, dass die UE (10) andere Medien als Sprache für IMS-Notrufsitzungen unterstützt;
einen Prozessor, der konfiguriert ist zum Bestimmen, ob andere Medien als Sprache für IMS-Notrufsitzungen mit der UE (20) unterstützt werden können, und Erzeugen einer Antwort auf die Notrufregistrierungsanfrage, die angibt, ob andere Medien als Sprache für IMS-Notrufsitzungen mit der UE (20) unterstützt werden können; und
einen Sender (12), der konfiguriert ist zum Senden der Antwort auf die Nachricht an die UE (20).

11. Vorrichtung nach Anspruch 9 oder Anspruch 10, wobei der Prozessor (13) weiter konfiguriert ist zum Implementieren der Verfahrensschritte nach einem der Ansprüche 2 bis 7.

12. Vorrichtung nach Anspruch 10, wobei, wenn die Einheit eine S-CSCF ist, dann der Prozessor (13) weiter konfiguriert ist zum Nutzen eines Benutzerprofils eines Benutzers der UE (20) beim Bestimmen, ob andere Medien als Sprache für IMS-Notrufsitzungen mit der UE (20) unterstützt werden können.

## Revendications

1. Procédé de fonctionnement d'une entité (10) à l'intérieur d'un réseau de sous-système multimédia IP, IMS, dans lequel l'entité est une fonction de commande de session d'appel proxy, P-CSCF, ou une fonction de commande de session d'appel d'urgence, E-CSCF, le procédé comprenant :
la réception par l'entité d'un message transmis par un équipement utilisateur, UE (20), le message étant une demande d'établissement d'une session d'urgence IMS, et le message incluant une indication que l'UE supporte des médias autres que la voix pour une urgence IMS ;
le fait de déterminer par l'entité si des médias autres que la voix peuvent être supportés pour des sessions d'urgence IMS impliquant l'UE ; et
la transmission par l'entité d'une réponse au message à l'UE (20), et l'inclusion dans la réponse d'une indication indiquant si des médias autres que la voix peuvent être supportés pour des sessions d'urgence IMS impliquant l'UE (20).

2. Procédé de fonctionnement d'une entité (10) à l'intérieur d'un réseau de sous-système multimédia IP, IMS, pour l'enregistrement d'urgence d'un équipement utilisateur, UE (20), dans lequel l'entité est une fonction de commande de session d'appel de desserte, S-CSCF, ou une fonction de commande de session d'appel proxy, P-CSCF, et le réseau IMS est le réseau de rattachement de l'UE, le procédé comprenant :
la réception par l'entité d'un message transmis par un équipement utilisateur, UE (20), le message étant une demande d'enregistrement d'urgence, et le message incluant une indication que l'UE supporte des médias autres que la voix pour des sessions d'urgence IMS ;
le fait de déterminer par l'entité si des médias autres que la voix peuvent être supportés pour des sessions d'urgence IMS impliquant l'UE ; et
la transmission par l'entité d'une réponse au message d'enregistrement d'urgence à l'UE (20), la réponse indiquant si des médias autres que la voix peuvent être supportés pour des sessions d'urgence IMS impliquant l'UE (20).

3. Procédé selon la revendication 1 ou la revendication 2, dans lequel l'étape du fait de déterminer si des médias autres que la voix peuvent être supportés pour des sessions d'urgence IMS impliquant l'UE (20) comprend l'un quelconque parmi :
le fait de déterminer si des médias autres que la voix peuvent être supportés pour des sessions d'urgence IMS par un centre de réception d'appels pour la sécurité publique, PSAP ;
le fait de déterminer si des médias autres que la voix peuvent être supportés pour des sessions d'urgence IMS par un réseau d'accès par le biais duquel l'UE accède au réseau IMS (10) ; et
le fait de déterminer si des médias autres que la voix peuvent être supportés pour des sessions d'urgence IMS par des entités dans le réseau IMS (10) qui dessert l'UE (20).

4. Procédé selon la revendication 3, dans lequel, afin de déterminer si des médias autres que la voix sont supportés par un PSAP disponible, le procédé comprend :
le fait de déterminer s'il existe un PSAP desservant une zone dans laquelle l'UE (20) est actuellement situé qui supporte des médias autres que la voix durant des sessions d'urgence IMS.

5. Procédé selon l'une quelconque des revendications précédentes, dans lequel la réponse à l'UE (20) comprend une étiquette de caractéristique incluse dans un champ d'en-tête de la réponse, l'étiquette de caractéristique indiquant que des médias autres que la voix peuvent être supportés pour des sessions d'urgence IMS impliquant l'UE (20).

6. Procédé selon l'une quelconque des revendications précédentes, dans lequel le message de réponse transmis à l'UE (20) inclut une indication de types de médias autres qui peuvent être supportés pour des sessions d'urgence IMS impliquant l'UE (20).

7. Procédé selon l'une quelconque des revendications précédentes, dans lequel l'indication que l'UE (20) supporte des médias autres que la voix pour des sessions d'urgence IMS comprend une étiquette de caractéristique incluse dans un champ d'entête du message reçu à partir de l'UE (20).

8. Procédé selon l'une quelconque des revendications précédentes, dans lequel le message reçu à partir de l'UE (20) inclut une indication de types de médias que l'UE (20) supporte pour des sessions d'urgence IMS.

9. Appareil (10) configuré pour fonctionner comme une entité à l'intérieur d'un réseau de sous-système multimédia IP, IMS, dans lequel l'entité est une fonction de commande de session d'appel proxy, P-CSCF, ou une fonction de commande d'appel d'urgence, E-CSCF, l'appareil comprenant :
un récepteur (11) configuré pour recevoir un message transmis par un UE (20), le message étant une demande d'établissement d'une session d'urgence IMS, et le message incluant une indication que l'UE (20) supporte des médias autres que la voix pour des sessions d'urgence IMS ;
un processeur configuré pour déterminer si des médias autres que la voix peuvent être supportés pour des sessions d'urgence IMS impliquant l'UE (20) et pour générer une réponse indiquant si des médias autres que la voix peuvent être supportés pour des sessions d'urgence IMS impliquant l'UE (20) ; et
un émetteur (12) configuré pour transmettre la réponse au message à l'UE (20).

10. Appareil configuré pour fonctionner comme une entité à l'intérieur d'un réseau de sous-système multimédia IP, IMS, (10) pour un enregistrement d'urgence d'un équipement utilisateur, UE (20), dans lequel l'entité est une fonction de commande de session d'appel de desserte, S-CSCF, ou une fonction de commande de session d'appel proxy, P-CSCF, et le réseau IMS est un réseau de rattachement de l'UE, l'appareil comprenant :
un récepteur (11) configuré pour recevoir un message transmis par un UE (20), le message étant une demande d'enregistrement d'urgence IMS, et le message incluant une indication que l'UE (10) supporte des médias autres que la voix pour des sessions d'urgence IMS ;
un processeur configuré pour déterminer si des médias autres que la voix peuvent être supportés pour des sessions d'urgence impliquant l'UE (20) et pour générer une réponse à la demande d'enregistrement d'urgence indiquant si des médias autres que la voix peuvent être supportés pour des sessions d'urgence IMS impliquant l'UE (20) ; et
un émetteur (12) configuré pour transmettre la réponse au message à l'UE (20).

11. Appareil selon la revendication 9 ou la revendication 10, dans lequel le processeur (13) est configuré en outre pour mettre en oeuvre les étapes de procédé selon l'une quelconque des revendications 2 à 7.

12. Appareil selon la revendication 10, dans lequel, si l'entité est une S-CSCF, alors le processeur (13) est configuré en outre pour utiliser un profil d'utilisateur d'un utilisateur de l'UE (20) quand il est déterminé si des médias autres que la voix peuvent être supportés pour des sessions d'urgence IMS impliquant l'UE (20).
